# EUROPEAN PATENT APPLICATION

(11) **EP 1 976 152 A1**
(43) Date of publication of application: **01.10.2008**
(21) Application number: 07006389.6
(22) Date of filing: 28.03.2007
(51) Int. Cl.: H04B 7/185

(54) **Method and system for providing an air-to-ground link**

(71) Applicant: Nokia Siemens Networks GmbH & Co. KG, 81541 München (DE)
(72) Inventor: The designation of the inventor has not yet been filed

(57) **Abstract**

The invention relates to a system for providing an air-to-ground link (3) between an on-board data network (10) of an aircraft (1) and a terrestrial data network (16) comprising an on-board antenna (4) which is steered depending on a position of said aircraft (1) output by an on-board navigation unit (8) of said aircraft (1) to establish said air-to-ground link (3) with an antenna (5) of a base station (2) connected to said terrestrial data network (16).

## Description

The invention relates to a method and a system for providing an air-to-ground link between an on-board data network of an aircraft and a terrestrial data network.

Currently, systems that provide mobile communication services in aircrafts use satellite links for the air-to-ground connection. A disadvantage of these conventional systems resides in that the available satellites have limited data transmission capacities, for example Inmarsat B-GAN provides a downlink with a data transmission rate of 432 kbit/sec. Since the data transmission bandwidth is restricted, the data transmission via satellites is relative expensive. Furthermore, the deployment of satellites in the orbit is very expensive and, in particular, in high-traffic regions, such as Western Europe or the United States the capacity of provided satellites is not sufficient for air-to-ground data transmission.

Accordingly, it is an object of the present invention to provide a method and a system for providing an air-to-ground link with sufficient data transmission capacity.

This object is achieved by a system comprising the features of claim 1.

The invention provides a system for providing an air-to-ground link between an on-board data network of an aircraft and a terrestrial data network comprising an on-board antenna which is steered depending on a position of said aircraft output by an on-board navigation unit of said aircraft to establish said air-to-ground link with an antenna of a base station connected to said terrestrial data network.

In an embodiment of the system according to the present invention, the on-board antenna is electronically steered by an antenna steering control unit of an on-board transceiver receiving position data from said on-board navigation unit.

In an embodiment of the system according to the present invention, the on-board antenna is connected via said transceiver to said on-board data network of said aircraft.

In an embodiment of the system according to the present invention, the antenna of the base station is controlled by an antenna steering control unit of a transceiver provided in said base station.

In an embodiment of the system according to the present invention, the base station is a mobile radio base station of a cellular network.

In an embodiment of the system according to the present invention, the air-to-ground link is a line of sight link.

In an embodiment of the system according to the present invention, the air-to-ground link is a bidirectional link for bidirectional data transmission.

In an embodiment of the system according to the present invention, the on-board navigation unit generates position data indicating an actual position of said aircraft.

In an embodiment of the system according to the present invention, a handover from a first base station to a second base station is performed when the aircraft leaves a transmission range of the first base station and enters a transmission range of the second base station.

In an embodiment of the system according to the present invention, the on-board antenna steering control unit is connected to a memory which stores position data of base stations connected to terrestrial data networks.

The invention further provides a method for providing an air-to-ground link for data transmission between an on-board data network of an aircraft and a terrestrial data network, wherein an on-board antenna of said aircraft being connected to said on-board data network is steered depending on a position of said aircraft output by an on-board navigation unit of said aircraft to establish the air-to-ground link with an antenna of a base station connected to said terrestrial data network.

The invention further provides a transceiver having an antenna steering control unit for steering an on-board antenna of an aircraft to establish an air-to-ground link with a terrestrial base station, wherein the antenna steering control unit steers said on-board antenna depending on position data provided by an on-board navigation unit indicating an actual position of said aircraft and depending on position data of terrestrial base stations.

In an embodiment of the transceiver according to the present invention, the transceiver is connected to a local on-board data network.

In an embodiment of the transceiver according to the present invention, the on-board data network comprises user terminals.

In an embodiment of the transceiver according to the present invention, the on-board network comprises WLAN access points.

In an embodiment of the transceiver according to the present invention, the on-board network comprises an on-board GSM base station.

In an embodiment of the transceiver according to the present invention, the transceiver compensates a doppler shift of a signal transmitted via the established air-to-ground link depending on a velocity of said aircraft.

In the following, preferred embodiments of the method and the system according to the present invention are described in more detail with respect to the enclosed figures.
Figure 1 is a diagram for illustrating a possible embodiment of a system according to the present invention;
figure 2 is a block diagram for illustrating an embodiment of a system according to the present invention;
figure 3 is a flow chart illustrating a possible embodiment of a method according to the present invention;
figure 4 is a further flow chart illustrating the establishment of an air-to-ground link according to an embodiment of a method according to the present invention.

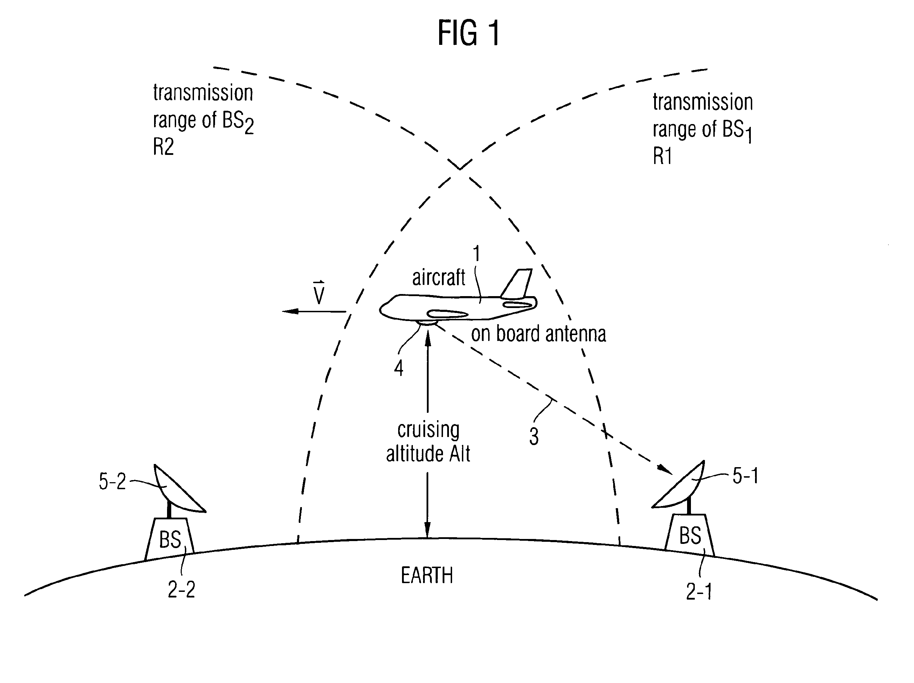

As can be seen from figure 1, an aircraft 1 is flying at a cruising altitude ALT with a velocity V. On the ground two base stations are located. In a possible embodiment, both base stations 2-1, 2-2 have a constant position on the ground. In a possible alternative embodiment, both base stations 2-1, 2-2 or at least one base station can be moved on the ground. The base stations 2-1, 2-2 are connected to a terrestrial data network, such as a cellular network. The cellular network can comprise a GSM, an UMTS-HSTPA, a WiMax, a 3GLTE or a CDMA2000 cellular network. As can be seen from figure 1, an air-to-ground link 3 is established between an on-board antenna 4 of the aircraft 1 and a base station antenna 5-1 of the base station 2-1. For providing the air-to-ground link 3, the on-board antenna 4 is steered depending on a position of said aircraft 1. The on-board antenna 4 is steered depending on position data, i. e. coordinates X_{A}, Y_{A}, Z_{A} output by an on-board navigation unit of the aircraft 1.

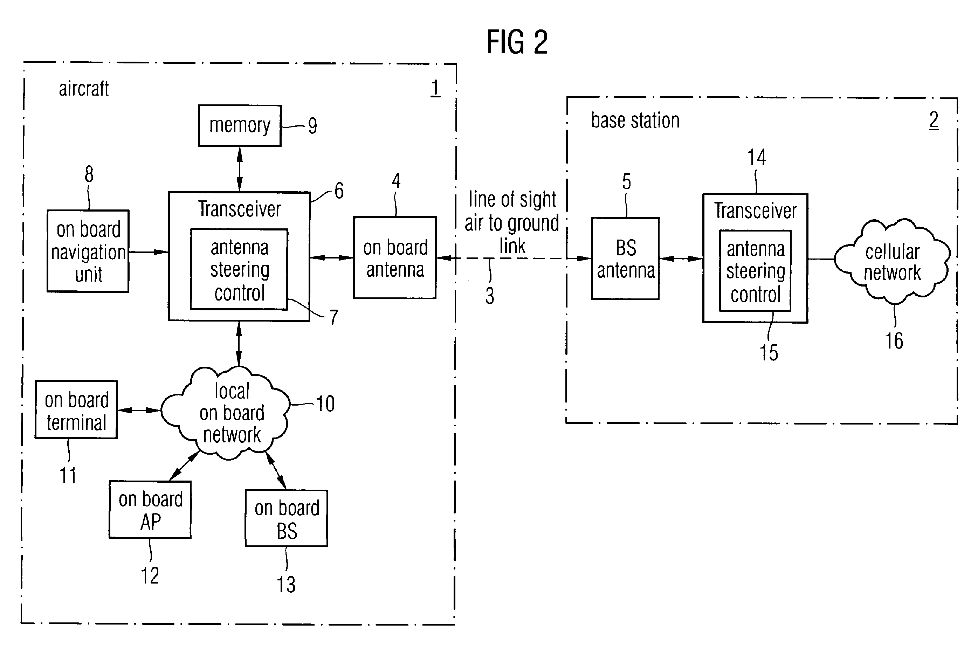

Figure 2 shows a block diagram for illustrating a possible embodiment of the system for providing an air-to-ground link according to the present invention. The on-board antenna 4 of the aircraft 1 is connected to a transceiver 6 comprising an antenna steering control unit 7. The transceiver 6 receives position data of the aircraft 1 from an on-board navigation unit 8. Furthermore, the transceiver 6 is connected to a memory 9 which stores position data of base stations 2 connected to terrestrial data networks. The transceiver 6 is further connected to a local on-board network 10 of the aircraft 1. The on-board network 10 comprises on-board terminals 11 for passengers and, optional, an on-board access point 12 as well as on-board GSM-base station 13.

The base station 2 comprises also a transceiver 14 comprising an antenna steering control unit 15, wherein the transceiver 14 of the base station is connected to a cellular data network, such as a GSM, UMTS, a WiMax, a 3GLTE or a CDMA2000 cellular network.

The on-board antenna 4 is steered by the antenna steering control unit 7 of the transceiver 6 depending on a position of the aircraft 1 output by the on-board navigation unit 8 of the aircraft 1. To establish the air-to-ground link 3 the antenna 5 of the base station 2 is connected to the terrestrial data network 16. The on-board antenna 4 is connected via the transceiver 6 to the on-board data network 10 of the aircraft 1.

In the same manner, the antenna 5 of the base station 2 is controlled by the antenna steering control unit 15 of the transceiver 14 provided in the base station 2. The base station 2 is, for example, a mobile radio base station of a cellular network. The air-to-ground link 3 is established between an on-board antenna 4 and the base station antenna 5 via a line of sight data transmission link. This air-to-ground link forms after establishment of the connection a bidirectional link for bidirectional data transmission comprising an uplink UL from the base station 2 to the aircraft 1 and a downlink DL from the aircraft 1 to the base station 2. In one embodiment, the on-board navigation unit 8 generates position data of the aircraft 1 by means of sensor devices, such as gyroscopes or by means of inertial guidance. In an alternative embodiment, the on-board navigation unit 8 receives the position data of the aircraft 1 from satellites.

The on-board antenna 4 and the antenna 5 of the base station 2 is formed in a possible embodiment by phase controlled array antennas.

As can be seen from figure 1, the aircraft 1 moves at a cruising altitude ALT with a speed V away from the first base station 2-1 to the second base station 2-2. The system according to the present invention performs a handover from the first base station 2-1 to the second base station 2-2 when the aircraft 1 leaves a transmission range R1 of the first base station 2-1 and enters a transmission range R2 of the second base station 2-2. The electronically steered antennas, i. e. on-board antennas 4 and ground antennas 5-2, such as phase controlled array antennas having patch antennas on a disk allow directing an antenna signal beam between the aircraft 1 and the respective ground base station 2-1, 2-2. The line of sight link between a base station 2 and an aircraft 1 flying at a cruising altitude of, for example 10 km can be obtained up to a radius of about 300 km. Therefore, with the system according to the present invention, a full coverage above ground can be achieved with a small number of base stations 2. By using a cellular network mobile radio station, a seamless handover between ground base stations 2-1, 2-2 is possible. In a possible embodiment, the signal strengths of signals transmitted via the air-to-ground link 3 are monitored and a handover is performed when the signal strength falls below a predetermined threshold. In an alternative embodiment, the handover is performed based on position data of the aircraft 1. A spacial separation of different aircrafts 1 allows extended beam steering technologies as spacial division multiple access allowing a very efficient re-use of frequency bands. Since the aircraft moves at a considerable speed of e. g. 800-900 km/h, the frequency of the transmitted signal undergoes a doppler shift effect. Accordingly, in an embodiment of the system according to the present invention, the transceivers 6, 14 as shown in figure 2 perform a linear doppler shift compensation depending on the speed of the aircraft 1.

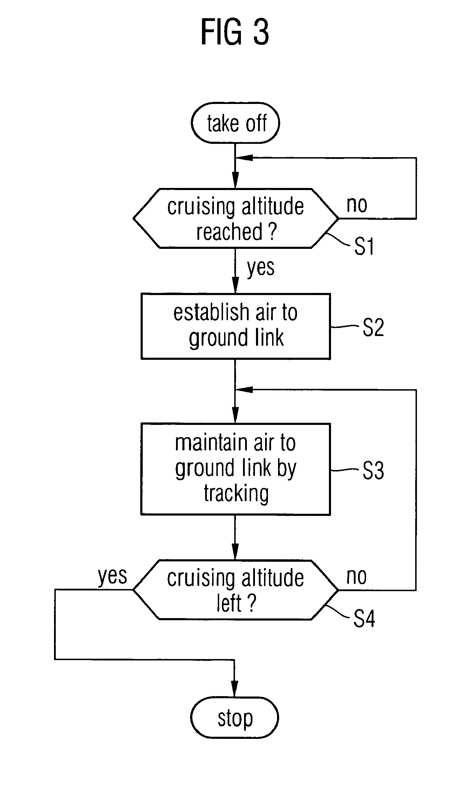

Figure 3 shows a flowchart for illustrating an embodiment of the method according to the present invention. After the take-off of the aircraft 1, the altitude of the aircraft 1 is monitored and it is decided in step S1 whether the aircraft 1 has reached its cruising altitude. When the aircraft 1 has reached its cruising altitude of, for instance 10 km, the air-to-ground link 3 is established in a step S2. After establishment, the air-to-ground link 3 is maintained by tracking the aircraft 1 in step S3. In step S4 it is decided whether the aircraft 1 has left its cruising altitude. When the aircraft 1 has left its cruising altitude, the air-to-ground link 3 is not longer maintained.

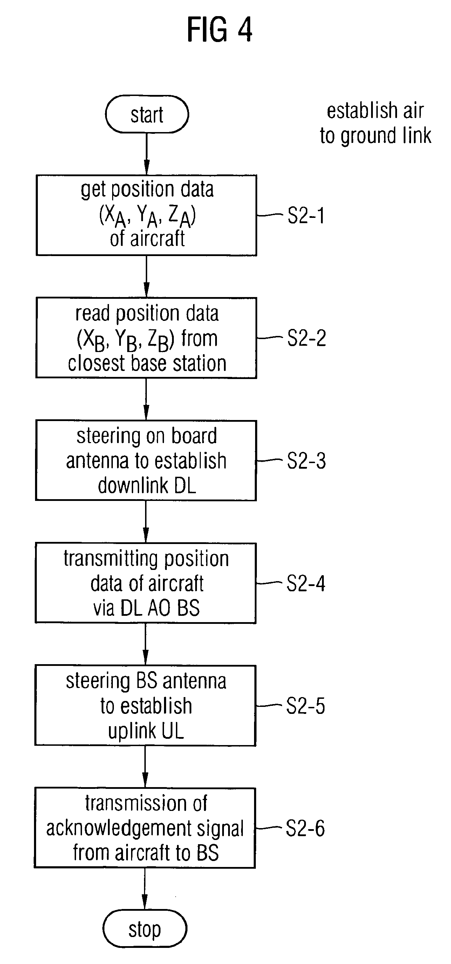

Figure 4 shows a possible embodiment of the establishment of an air-to-ground link 3 according to one embodiment of the present invention.

In a first step S2-1, the transceiver 6 of the aircraft 1 gets position data from the on-board navigation unit 8. After having received the position data of the aircraft 1, the transceiver 6 reads the position data of the closest base station 2 from the memory 9.

In a further step S2-3, the antenna steering control unit 7 within the transceiver 6 steers the on-board antenna 4 depending on the position of the aircraft 1 and depending on the position data of the closest base station 2.

In a further step S2-4, position data of the aircraft 1 is transmitted by the on-board antenna 4 via a downlink DL to the closest base station 2.

After having received the position data of the aircraft 1, the steering control unit 15 of the transceiver 14 within the base station 2 steers the base station antenna 5 depending on the received position data of the aircraft 1 and the position data of the base station 2. The steering of the base station antenna 5 is performed in step S2-5 to establish an uplink UL to the aircraft 1.

In a further step S2-6, the on-board antenna 4 of the aircraft 1 transmits an acknowledgement signal to the base station 2 indicating that the uplink UL has been established.

After establishment of the downlink DL in step S2-3 and of the uplink UL in step S2-6, a bidirectional air-to-ground link between the aircraft 1 and the base station 2 is achieved. After establishment of the air-to-ground link 3, several services can be offered to the passengers of the aircraft 1, such as Internet access, telephony, VPN or e-mail exchange via the terrestrial data networks.

## Claims

1. A system for providing an air-to-ground link (3) between an on-board data network (10) of an aircraft (1) and a terrestrial data network (16) comprising:
an on-board antenna (4) which is steered depending on a position of said aircraft (1) output by an on-board navigation unit (8) of said aircraft (1) to establish said air-to-ground link (3) with an antenna (5) of a base station (2) connected to said terrestrial data network (16).

2. The system according to claim 1,
wherein the on-board antenna (4) is electronically steered by an antenna steering control unit (7)of an on-board transceiver (6) receiving position data from said on-board navigation unit (8).

3. The system according to claim 2,
wherein the on-board antenna (4) is connected via said transceiver (6) to said on-board data network (10) of said aircraft (1).

4. The system according to claim 1,
wherein the antenna (5) of the base station (2) is controlled by an antenna steering control unit (15) of a transceiver (14) provided in said base station (2).

5. The system according to claim 4,
wherein the base station (2) is a mobile radio base station of a cellular network.

6. The system according to claim 1,
wherein the air-to-ground link (3) is a line of sight link.

7. The system according to claim 1,
wherein the air-to-ground link (3) is a bidirectional link for bidirectional data transmission.

8. The system according to claim 1,
wherein the on-board navigation unit (8) generates position data indicating an actual position of said aircraft (1).

9. The system according to claim 1,
wherein a handover from a first base station (2-1) to a second base station (2-2) is performed when the aircraft (1) leaves a transmission range (R1) of the first base station and enters a transmission range (R2) of the second base station (2-2).

10. The system according to claim 2,
wherein the on-board antenna steering control unit (7) is connected to a memory (9) storing position data of base stations (2) connected to terrestrial data networks (16).

11. A method for providing an air-to-ground link (3) for data transmission between an on-board data network (10) of an aircraft (1) and a terrestrial data network (16),
wherein an on-board antenna (4) of said aircraft (1) connected to said on-board data network (10) is steered depending on a position of said aircraft (1) output by an on-board navigation unit (8) of said aircraft (1) to establish the air-to-ground link (3) with an antenna (4) of a base station (2) connected to said terrestrial data network (16).

12. A transceiver (6) having an antenna steering control unit (7) for steering an on-board antenna (4) of an aircraft (1) to establish an air-to-ground link (3) with a terrestrial base station (2),
wherein the antenna steering control unit (7) steers said on-board antenna (4) depending on position data provided by an on-board navigation unit (8) indicating an actual position of said aircraft (1) and depending on position data of terrestrial base stations (2).

13. A transceiver according to claim 12,
wherein the transceiver (6) is connected to a local on-board data network (10).

14. A transceiver according to claim 13,
wherein the on-board network (10) comprises user terminals (11).

15. A transceiver according to claim 13,
wherein the on-board data network (10) comprises access points (12).

16. A transceiver according to claim 13,
wherein the on-board data network (10) comprises on-board GSM-base stations (13).

17. A transceiver according to claim 12,
wherein the transceiver (6) compensates a doppler shift of a signal transmitted via the actual air-to-ground link (3) depending on a velocity (V) of said aircraft (1).
